# EUROPÄISCHE PATENTSCHRIFT

(11) **EP 1 028 259 B1**
(45) Veröffentlichungstag und Bekanntmachung des Hinweises auf die Patenterteilung: **08.06.2005**
(21) Anmeldenummer: 99125038.2
(22) Anmeldetag: 15.12.1999
(51) Int. Cl.: F16B 5/02

(54) **Befestigungsvorrichtung zur lösbaren Verankerung eines feuerfesten Bauteiles an einem metallischen Bauteil**
Device for detachably anchoring a fire resistant member to a metal member
Dispositif d'ancrage amovible d'un élément ignifuge à un élément métallique

(30) Priorität: 10.02.1999 DE 29902339 U
(43) Veröffentlichungstag der Anmeldung: 16.08.2000
(73) Patentinhaber: BECK u. KALTHEUNER, FEUERFESTE ERZEUGNISSE GmbH & CO. KG, D-58840 Plettenberg (DE)
(72) Erfinder: Küppers, Diethardt, 58840 Plettenberg (DE)
(74) Vertreter: Grünecker, Kinkeldey, Stockmair & Schwanhäusser Anwaltssozietät

(56) Entgegenhaltungen:
- DE-A- 1 500 929
- US-A- 2 537 527
- US-A- 3 124 031

## Beschreibung

Die Erfindung betrifft eine Befestigungsvorrichtung zur lösbaren Verankerung eines feuerfesten Bauteiles an einem metallischen Bauteil, die in verschiedenen Konstruktionen im Bereich der Metallurgie Einsatz findet.

Üblicherweise ist eine solche Befestigungsvorrichtung in das feuerfeste Bauteil eingegossen oder eingestampft und deshalb aus dem Bauteil nicht zerstörungsfrei lösbar. Einer von der Anmelderin auf den Markt gebrachten verbesserten Ausführungsform dieser Befestigungsvorrichtung liegt der Gedanke zugrunde, die Befestigungsvorrichtung so zu gestalten, daß sie in das feuerfeste Bauteil ein- und wieder ausgebaut werden kann. Zu diesem Zwecke weist die Befestigungsvorrichtung einen Befestigungskloben auf, dessen erstes Ende ein erstes Gewinde aufweist, das in eine im feuerfesten Bauteil ausgebildete Gewindebohrung einschraubbar ist. Am zweiten Ende des Befestigungsklobens ist eine stiftförmige Verlängerung ausgebildet, deren freies Ende ein zweites Gewinde aufweist. Auf dieses zweite Gewinde ist eine Befestigungsmutter aufschraubbar. Zur Verankerung des feuerfesten Bauteils am metallischen Bauteil ist die stiftförmige Verlängerung, das metallische Bauteil durchsetzend, angeordnet. Auf diese Weise sind die beiden Bauteile mit Hilfe der Befestigungsmutter verschraubbar.

Diese lösbare Befestigungsvorrichtung gestattet die Weiterverwendung auch nach dem Verschleiß des feuerfesten Bauteiles. Darüber hinaus kann das feuerfeste Bauteil zunächst bei hohen Temperaturen gebrannt werden, woraufhin die Befestigungsvorrichtung in das erkaltete feuerfeste Bauteil eingeschraubt wird.

Das Problem bei dieser Befestigungsvorrichtung besteht darin, daß beim Anziehen der Befestigungsmutter zum Verschrauben der beiden Bauteile unkontrollierte Drehmomente auf den Befestigungskloben wirken. Dadurch wird der Befestigungskloben unerwünschterweise in der im feuerfesten Bauteil vorgesehenen Gewindebohrung gedreht, wodurch der Befestigungskloben eine axiale Relativbewegung bezüglich des feuerfesten Bauteiles erfährt. Aufgrund dieser axialen Relativbewegung treten Spannungen im feuerfesten Bauteil auf, die das Bauteil zerstören können.

Aus der US-A-2,537,527 ist eine Befestigungseinrichtung der im Oberbegriff des Anspruchs 1 angegebenen Gattung bekannt, welche sich zur lösbaren Verankerung eines feuerfesten Bauteils an einem metallischen Bauteil eignet.

Ferner ist aus der US-A-3,124,031 eine Befestigungsvorrichtung bekannt, die sich gleichfalls zur lösbaren Verankerung eines feuerfesten Bauteils an einem metallischen Bauteil eignet. Diese bekannte Vorrichtung umfasst die im Oberbegriff des Anspruchs 1 angegebenen Merkmale, wobei jedoch lediglich dem Befestigungskloben eine Verdrehsicherung zugeordnet ist.

Eine die Merkmale des Oberbegriffs des Anspruchs 1 aufweisende Befestigungsvorrichtung ist auch aus der DE-A-1 500 929 bekannt, wobei jedoch allein der Befestigungskloben eine Verdrehsicherung aufweist und die Befestigungsmutter kein Teil der Befestigungsvorrichtung ist.

Es ist eine Aufgabe der vorliegenden Erfindung, eine Befestigungsvorrichtung zu schaffen, mit deren Hilfe die axiale Relativbewegung des Befestigungsklobens während des Verschraubens vermieden wird. Darüber hinaus soll diese Befestigungsvorrichtung weiterhin einen schnellen und einfachen Einbau gestatten.

Diese Aufgabe wird durch die Befestigungsvorrichtung gemäß Anspruch 1 gelöst.

Diese Befestigungsvorrichtung hat den Vorteil, daß nicht nur die unerwünschte Drehung des Befestigungsklobens in der Gewindebohrung des feuerfesten Bauteiles verhindert wird, wodurch das Auftreten von Spannungen im Bauteil vermieden wird, sondern beinhaltet den weiteren Vorteil, dass eine einfache und billige, aber gleichzeitig sichere Möglichkeit angegeben ist, die gewünschte lösbare Verbindung der Scheibe mit dem Befestigungskloben zu verwirklichen.

Verbesserungen und bevorzugte Ausführungsformen der erfindungsgemäßen Befestigungsvorrichtung sind in den Unteransprüchen angegeben.

Vorteilhafterweise ist die stiftförmige Verlängerung als eine Stiftschraube ausgebildet, deren eines Ende in eine Gewindebohrung einschraubbar ist, die im zweiten Ende des Befestigungsklobens vorgesehen ist. Auf diese Weise können Stiftschrauben mit verschiedenen Längen verwendet werden, die dem jeweiligen metallischen Bauteil angepaßt ist, das zur Verankerung von der Stiftschraube durchsetzt wird.

In einer bevorzugten Ausführungsform ist eine Diagonale der Vierkantscheibe größer als der Durchmesser des Befestigungsklobens. Diese Ausführungsform gestattet vorteilhafterweise den einfachen Einbau der Befestigungsvorrichtung, wobei gleichzeitig die Drehung des Befestigungsklobens während des Verschraubens sicher verhindert wird. Da diese Ausführungsform nur auf Standardbauteile zurückgreift, kann eine solche Befestigungsvorrichtung sehr billig hergestellt werden.

Weiterhin ist es vorteilhaft, daß zur Verankerung des feuerfesten Bauteiles die Mutter einen Anschlag bildet, der an dem metallischen Bauteil auf der Seite des feuerfesten Bauteiles anliegt, wobei mit Hilfe des Anschlags und der auf der anderen Seite des metallischen Bauteiles anliegenden Befestigungsmutter die stiftförmige Verlängerung vorspannbar ist. Bei dieser Anordnung wirken vorteilhafterweise die Vorspannkräfte ausschließlich zwischen der als Anschlag dienenden Mutter, die die Vierkantscheibe mit dem Befestigungskloben verbindet, und der Befestigungsmutter. Somit wird das Auftreten von Spannungen im feuerfesten Bauteil noch sicherer unterbunden.

Schließlich kann die Befestigungsvorrichtung eine auf die stiftförmige Verlängerung aufschraubbare Kontermutter aufweisen, mit deren Hilfe die Befestigungsmutter sicherbar ist.

Die Erfindung wird im folgenden anhand von Ausführungsbeispielen unter Bezug auf die Zeichnung näher beschrieben.

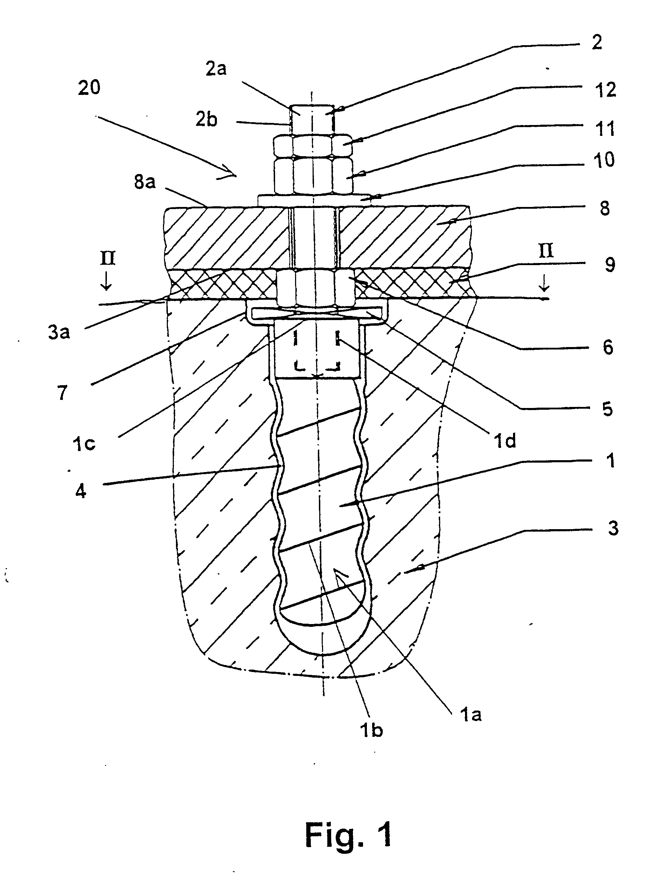

In dieser zeigen:
- Fig. 1: einen Längsschnitt durch ein feuerfestes Bauteil, das mit Hilfe einer Ausführungsform der erfindungsgemäßen Befestigungsvorrichtung an einem metallischen Bauteil verankert ist;
- Fig. 2: eine Aufsicht auf das feuerfeste Bauteil entlang der Linie II-II, bevor die beiden Bauteile verschraubt sind;
- Fig. 3: eine Aufsicht auf das feuerfeste Bauteil entlang der Linie II-II, nachdem die beiden Bauteile verschraubt sind; und
- Fig. 4: eine perspektivische Ansicht einer Ausführungsform der erfindungsgemäßen Befestigungsvorrichtung.
Die in der Fig. 1 gezeigte Ausführungsform umfaßt einen Befestigungskloben 1, eine Vierkantscheibe 5, eine Mutter 6, eine stiftförmige Verlängerung 2, eine Beilagscheibe 10, eine Befestigungsmutter 11 sowie eine Kontermutter 12. Der Befestigungskloben 1 weist ein erstes Ende 1a sowie ein zweites Ende 1c auf. Das erste Ende 1a ist als ein erstes Gewinde 1b ausgebildet, das, wie in der Fig.1 gezeigt, in eine im feuerfesten Bauteil 3 vorgesehene Gewindebohrung 4 eingeschraubt ist. Aufgrund der hohen Temperaturen, denen das feuerfeste Bauteil 3 ausgesetzt ist, unterliegt dieses Bauteil einer bestimmten Wärmedehnung. Um diese Wärmedehnung zu kompensieren, ist zwischen dem Befestigungskloben 1 und der Gewindebohrung 4 ein Freiraum ausgebildet.

Wie mit den gestrichelten Linien in der Fig. 1 angedeutet, ist im zweiten Ende 1c des Befestigungsklobens 1 eine Gewindebohrung 1d vorgesehen, in die eine stiftförmige Verlängerung 2 eingeschraubt ist. Die Länge dieser stiftförmigen Verlängerung 2 ist so bemessen, daß im eingebauten Zustand deren freies Ende 2a aus dem metallischen Bauteil ausreichend weit hervorsteht, so daß wenigstens eine Befestigungsmutter 11 auf das am freien Ende 2a ausgebildete zweite Gewinde 2b aufgeschraubt werden kann.

Der Durchmesser der stiftförmigen Verlängerung 2 ist kleiner als der Durchmesser des Befestigungsklobens 1, so daß im eingeschraubten Zustand zwischen dem Umfang der stiftförmigen Verlängerung 2 und dem Umfang des Befestigungsklobens 1 ein Rand ausgebildet ist. Die auf die stiftförmige Verlängerung 2 aufsteckbare Vierkantscheibe 5 liegt auf diesem Rand auf. Um die Vierkantscheibe 5 vor Verdrehen zu sichern, ist, wie in der Fig. 1 gezeigt, eine Mutter 6 auf die stiftförmige Verlängerung 2 aufgeschraubt, die die Vierkantscheibe 5 am zweiten Ende 1c des Befestigungsklobens 1 gegen den Rand preßt.

Zur Verankerung des feuerfesten Bauteiles 3 am metallischen Bauteil 8 ist die stiftförmige Verlängerung 2 durch das metallische Bauteil 8 hindurchgesteckt. Dadurch kommt die Mutter 6, die die Vierkantscheibe 5 sichert, in Anlage mit der dem feuerfesten Bauteil zugewandten Seite 3a des metallischen Bauteiles 8. Auf das freie Ende 2a der stiftförmigen Verlängerung 2 kann eine Beilagscheibe 10 aufgesteckt werden, die, wie in der Fig.1 gezeigt, auf der Seite 8a des metallischen Bauteils 8 aufliegt.

Zur Verankerung des feuerfesten Bauteils 3 am metallischen Bauteil 8 ist eine Befestigungsmutter 11 auf das am freien Ende 2a der stiftförmigen Verlängerung 2 vorgesehene Gewinde 2b aufgeschraubt. Die Befestigungsmutter 11 kann mit Hilfe einer Kontermutter 12 gesichert werden.

Im eingebauten Zustand ist die Vierkantscheibe 5 in einer Aussparung 7 des feuerfesten Bauteils 3 aufgenommen, wie in der Fig.1 zu erkennen.

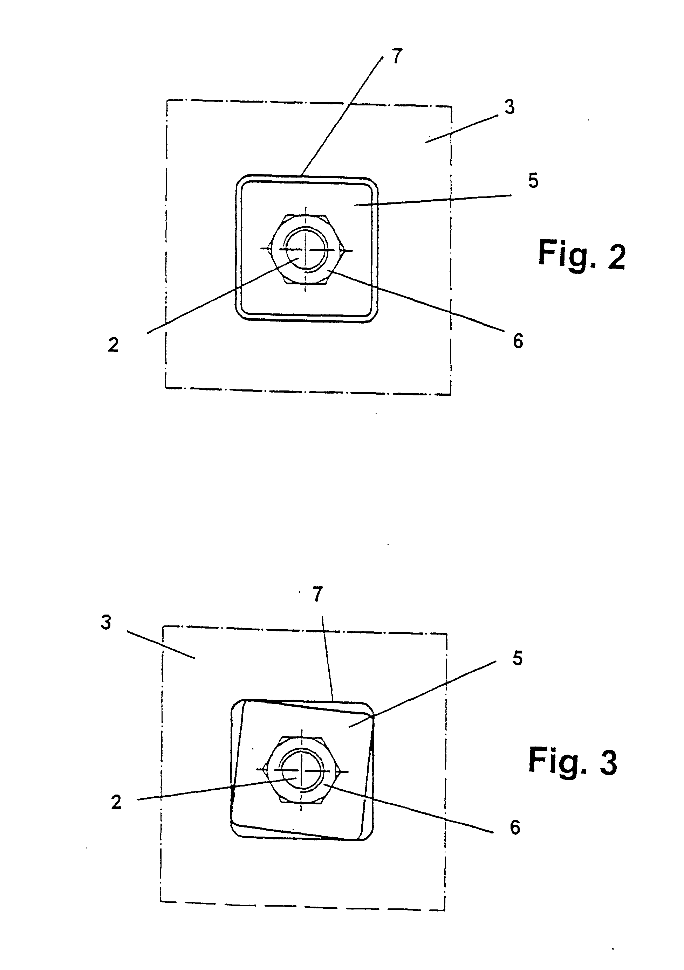

In der Fig. 2 ist dargestellt, daß die Umfangsgestalt der Aussparung 7 der Form der Vierkantscheibe 5 angepaßt ist. Die Umfangsgestalt der Aussparung 7 ist also in diesem Ausführungsbeispiel rechteckig. Um den Einbau zu erleichtern, ist die Aussparung 7 etwas größer als die Vierkantscheibe 5, wie in der Fig.2 gezeigt.

Während in der Fig. 2 die Befestigungsvorrichtung vor dem Verschrauben gezeigt ist, ist in der Fig. 3 gezeigt, wie die Vierkantscheibe 5 im Zusammenwirken mit der Ausparung 7 des feuerfesten Bauteils 3 die unerwünschte Drehung des Befestigungsklobens 1 während des Verschraubens hemmt. Dabei verkanten die über den Kloben 1 vorstehenden Ecken der Vierkantscheibe 5 mit den Seitenflächen der Aussparung 7, wodurch die freie Drehung der Vierkantscheibe 5 und somit des Klobens 1 verhindert ist. Wenigstens die Ecken der Vierkantscheibe 5 müssen deshalb über den Kloben 1 vorstehen, was bedeutet, daß die Diagonale der Vierkantscheibe 5 größer als der Durchmesser des Klobens 1 ist.

Selbstverständlich ist die Verdrehsicherung nicht auf die in diesem Ausführungsbeispiel verwendete Vierkantscheibe 5 beschränkt, sondern Scheiben mit anderen Formen, die die umdrehungshemmende Funktion erfüllen, sind denkbar. So können z.B. dreieckige oder ovale Scheiben verwendet werden, bei denen wenigstens ein Teil der Scheibe über den Umfang des Klobens 1 vorsteht.

Wie insbesondere aus der Fig. 1 deutlich wird, ist in diesem Ausführungsbeispiel die Verdrehsicherung durch Zusammenwirken der am Kloben 1 befestigten Vierkantscheibe 5 mit der Aussparung 7 des feuerfesten Bauteils 3 verwirklicht.

Obwohl es sich als vorteilhaft erwiesen hat, als stiftförmige Verlängerung eine stiftförmige Verlängerung 2 zu verwenden, die je nach gewünschter Länge ausgewechselt werden kann, kann natürlich die stiftförmige Verlängerung auch fest mit dem Kloben 1 ausgebildet sein. Die lösbare Verbindung zwischen der Vierkantscheibe 5 und dem Kloben 1 wird in der in der Fig.1 gezeigten Ausführungsform mit Hilfe der Mutter 6 verwirklicht. Darüber hinaus dient diese Mutter 6 auch als Anschlag, der an dem metallischen Bauteil 8 auf der Seite 3a des feuerfesten Bauteiles 3 anliegt. Zum Verankern wird von der anderen Seite 8a des metallischen Bauteils 8 die Befestigungsmutter 11 auf die stiftförmige Verlängerung 2 aufgeschraubt und angezogen. Die dadurch entstehende Vorspannkraft wirkt somit nur zwischen der als Anschlag dienende Mutter 6 und der Befestigungsmutter 11.

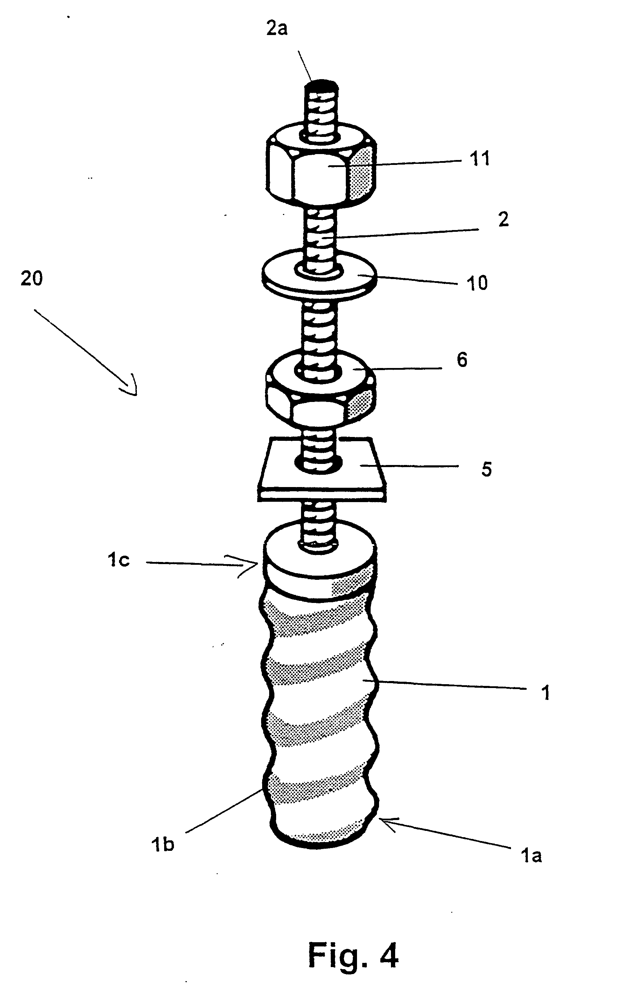

Die Fig.4 zeigt in perspektivischer Ansicht die einzelnen Bestandteile der Befestigungsvorrichtung 20. Zum Einbau dieser Befestigungsvorrichtung 20 wird zunächst in den Befestigungskloben 1 die stiftförmige Verlängerung 2 eingeschraubt. Die so zusammengebauten Teile werden in das feuerfeste Bauteil 3 handfest eingeschraubt. Die Vierkantscheibe 5 wird daraufhin auf die stiftförmige Verlängerung 2 aufgeschoben, bis die Vierkantscheibe 5 in der Aussparung 7 des feuerfesten Bauteils 3 aufgenommen ist. Daraufhin wird die Vierkantscheibe 5 mit Hilfe der Mutter 6 auf dem Befestigungskloben 1 fest aufgeschraubt. Die dadurch entstandene Einheit sitzt nun locker im feuerfesten Bauteil 3 und ist aufgrund der Vierkantscheibe 5, die umdrehungshemmend mit der Aussparung 7 im Eingriff ist, weitgehend verdrehsicher gehalten. Das feuerfeste Bauteil 3 wird nun mit dem metallischen Bauteil 8 verbunden, indem die **stiftförmige Verlängerung** 2 durch die im metallischen Bauteil 8 vorgesehene Bohrung gesteckt wird. Daraufhin wird eine Unterlegscheibe 10 auf das freie Ende 2a der stiftförmigen Verlängerung 2 aufgesteckt, woraufhin die Befestigungsmutter 11 auf das Gewinde 2b des freien Endes 2a der stiftförmigen Verlängerung 2 aufgeschraubt und angezogen wird. Zur Sicherung der Befestigungsmutter 11 kann eine Kontermutter 12 auf die **stiftförmige Verlängerung** 2 aufgeschraubt werden.

Zum Ausgleich von Unebenheiten und zur Isolation kann vor dem Verbinden des feuerfesten Bauteils 3 mit dem metallischen Bauteil 8 eine zusammenpressbare Isoliermatte 9 zwischen diese beiden Bauteile 3, 8 eingelegt werden.

## Patentansprüche

1. Befestigungsvorrichtung (20) zur lösbaren Verankerung eines feuerfesten Bauteiles (3) an einem metallischen Bauteil (8) mit
- einem Befestigungskloben (1), dessen erstes Ende (1a) ein erstes Gewinde (1b) aufweist, das in eine im feuerfesten Bauteil (3) ausgebildete Gewindebohrung (4) einschraubbar ist, und an dessen zweitem Ende (1c) eine stiftförmige Verlängerung (2) vorgesehen ist, deren freies Ende (2a) ein zweites Gewinde (2b) aufweist, und mit
- einer auf diesem zweiten Gewinde aufschraubbaren Befestigungsmutter (11),
wobei zur Verankerung des feuerfesten Bauteils (3) am metallischen Bauteil (8) das metallische Bauteil (8) von der stiftförmigen Verlängerung (2) durchsetzbar ist, wodurch die beiden Bauteile (3, 8) mit Hilfe der Befestigungsmutter (11) miteinander verschraubbar sind, und wobei der Befestigungskloben (1) eine Verdrehsicherung aufweist, die mit dem feuerfesten Bauteil (3) umdrehungshemmend in Eingriff bringbar ist, wodurch während des Verschraubens eine Drehung des Befestigungsklobens (1) in der Gewindebohrung (4) verhinderbar ist,
**dadurch gekennzeichnet, dass**
die Verdrehsicherung als eine Scheibe (5) in Form einer Vierkantscheibe oder einer Dreieckscheibe oder einer ovalen Scheibe ausgebildet ist, die auf die stiftförmige Verlängerung (2) aufsteckbar und in einer Aussparung (7) des feuerfesten Bauteils (3) aufnehmbar ist, deren Umfangsgestalt der Form der Scheibe (5) angepasst ist,
wobei die Scheibe (5) mit Hilfe einer auf die stiftförmige Verlängerung (2) aufschraubbaren Mutter (6) gegen das zweite Ende (1c) des Befestigungsklobens (1) pressbar ist.

2. Befestigungsvorrichtung (20) nach Anspruch 1, **dadurch gekennzeichnet, dass** die stiftförmige Verlängerung (2) als eine Stiftschraube ausgebildet ist, deren eines Ende in eine Gewindebohrung (1d) einschraubbar ist, die im zweiten Ende (1c) des Befestigungsklobens (1) vorgesehen ist.

3. Befestigungsvorrichtung (20) nach wenigstens einem der vorangegangenen Ansprüche, **dadurch gekennzeichnet, dass** eine Diagonale der Vierkantscheibe größer als der Durchmesser des Befestigungsklobens (1) ist.

4. Befestigungsvorrichtung (20) nach Anspruch 1, **dadurch gekennzeichnet, dass** zur Verankerung des feuerfesten Bauteiles (3) die Mutter (6) einen Anschlag bildet, der an dem metallischen Bauteil (8) auf der Seite (3a) des feuerfesten Bauteiles (3) anliegt, wobei mit Hilfe des Anschlags und der auf der anderen Seite (8a) des metallischen Bauteiles (8) anliegenden Befestigungsmutter (11) die stiftförmige Verlängerung (2) vorspannbar ist.

5. Befestigungsvorrichtung (20) nach Anspruch 3, **dadurch gekennzeichnet, dass** die Befestigungsvorrichtung (20) eine auf die stiftförmige Verlängerung (2) aufschraubbare Kontermutter (12) aufweist, mit deren Hilfe die Befestigungsmutter (11) sicherbar ist.

## Claims

1. Fastening device (20) for detachably anchoring a fire-resistant component (3) to a metallic component (8) having
- a fastening pin (1), the first end (1a) of which has a first thread (1b) which can be screwed into a threaded bore (4) formed in the fire-resistant component (3), and at the second end (1c) of which there is provided a rod-shaped extension (2), the free end (2a) of which has a second thread (2b), and having
- a fastening nut (11) which can be screwed onto this second thread,
it being possible, for the purpose of anchoring the fire-resistant component (3) to the metallic component (8), for the rod-shaped extension (2) to pass through the metallic component (8), whereby the two components (3, 8) can be screwed together with the aid of the fastening nut (11), and the fastening pin (1) having an anti-rotation means which can be brought into engagement in a rotation-inhibiting manner with the fire-resistant component (3), whereby rotation of the fastening pin (1) in the threaded bore (4) during the screwing can be prevented,
**characterised in that**
the anti-rotation means is designed as a washer (5) in the form of a square washer or a triangular washer or an oval washer which can be slipped onto the rod-shaped extension (2) and accommodated in a recess (7) of the fire-resistant component (3), the peripheral form of which recess matches the shape of the washer (5), it being possible for the washer (5) to be pressed against the second end (1c) of the fastening pin (1) with the aid of a nut (6) which can be screwed onto the rod-shaped extension (2).

2. Fastening device (20) according to Claim 1, **characterised in that** the rod-shaped extension (2) is designed as a stud, one end of which can be screwed into a threaded bore (1d) provided in the second end (1c) of the fastening pin (1).

3. Fastening device (20) according to at least one of the preceding claims, **characterised in that** a diagonal of the square washer is greater than the diameter of the fastening pin (1).

4. Fastening device (20) according to Claim 1, **characterised in that**, for the purpose of anchoring the fire-resistant component (3), the nut (6) forms a stop which bears against the metallic component (8) on the side (3a) of the fire-resistant component (3), it being possible for the rod-shaped extension (2) to be prestressed with the aid of the stop and the fastening nut (11) bearing on the other side (8a) of the metallic component (8).

5. Fastening device (20) according to Claim 3, **characterised in that** the fastening device (20) has a lock nut (12) which can be screwed onto the rod-shaped extension (2) and with the aid of which the fastening nut (11) can be secured.

## Revendications

1. Dispositif de fixation (20) destiné à fixer de manière amovible un élément ignifuge (3) à un élément métallique (8) avec
- un moyen de fixation (1), dont la première extrémité (1a) comprend un premier filet (1b), qui peut être vissé dans un alésage taraudé (4) conçu dans l'élément ignifuge (3), et à la seconde extrémité (1c) duquel est prévu un prolongement en forme de goujon (2), dont l'extrémité libre (2a) comporte un second filet (2b) et avec
- un écrou de fixation (11) susceptible d'être vissé sur ce second filet,
dans lequel l'élément métallique (8) peut être traversé par le prolongement en forme de goujon (2) afin de fixer l'élément ignifuge (3) à l'élément métallique (8), les deux éléments (3, 8) pouvant être vissés l'un à l'autre à l'aide de l'écrou de fixation (11), et le moyen de fixation (1) comprenant un limiteur de rotation, qui peut être amené en prise avec l'élément ignifuge (3) afin d'empêcher une rotation, grâce à quoi une rotation du moyen de fixation (1) dans l'alésage fileté (4) peut être empêchée pendant le vissage,
**caractérisé en ce que**
le limiteur de rotation est conçu comme une plaque (5) sous forme de plaque carrée ou d'une plaque triangulaire ou d'une plaque ovale, qui peut être monté sur le prolongement en forme de goujon (2) et peut être reçu dans un évidement (7) de l'élément ignifuge (3), dont la configuration périphérique est adaptée à la forme de la plaque (5), la plaque (5) pouvant être pressée contre la seconde extrémité (1c) du moyen de fixation (1) à l'aide d'un écrou (6) pouvant être vissé sur le prolongement en forme de goujon (2).

2. Dispositif de fixation (20) selon la revendication 1, **caractérisé en ce que** le prolongement en forme de goujon (2) est conçu comme une vis sans tête, dont une extrémité peut être vissée dans un alésage taraudé (1d), qui est prévu dans la seconde extrémité (1c) du moyen de fixation (1).

3. Dispositif de fixation (20) selon au moins l'une quelconque des revendications précédentes, **caractérisé en ce qu'**une diagonale de la plaque carrée est supérieure au diamètre du moyen de fixation (1).

4. Dispositif de fixation (20) selon la revendication 1, **caractérisé en ce que**, pour fixer l'élément ignifuge (3), l'écrou (6) forme une butée qui s'applique contre l'élément métallique (8) sur le côté (3a) de l'élément ignifuge (3), le prolongement en forme de goujon (2) pouvant être serré à l'aide de la butée et de l'écrou de fixation (11) situé sur l'autre côté (8a) de l'élément métallique (8).

5. Dispositif de fixation (20) selon la revendication 3, **caractérisé en ce que** le dispositif de fixation (20) comporte un contre-écrou (12) pouvant être vissé sur le prolongement en forme de goujon (2), contre-écrou à l'aide duquel peut être bloqué l'écrou de fixation (11).
